# EUROPÄISCHE PATENTSCHRIFT

(11) **EP 3 360 239 B1**
(45) Veröffentlichungstag und Bekanntmachung des Hinweises auf die Patenterteilung: **07.06.2023**
(21) Anmeldenummer: 16763524.2
(22) Anmeldetag: 12.09.2016
(51) Int. Cl.: H02K 41/03, B21J 7/30, H02K 7/14

(54) **UMFORMMASCHINE, INSBESONDERE SCHMIEDEHAMMER**
FORMING MACHINE, IN PARTICULAR A FORGING HAMMER
MACHINE DE MISE EN FORME PAR DÉFORMATION PLASTIQUE, NOTAMMENT MARTEAU DE FORGERON

(30) Priorität: 05.10.2015 DE 102015116881
(43) Veröffentlichungstag der Anmeldung: 15.08.2018
(73) Patentinhaber: Langenstein & Schemann GmbH, 96450 Coburg (DE)
(72) Erfinder: OTTO, Markus, 96486 Lautertal (DE)
(74) Vertreter: Schröer, Gernot H.
(86) Internationale Anmeldenummer: PCT/EP2016/071456
(87) Internationale Veröffentlichungsnummer: WO 2017/060045

(56) Entgegenhaltungen:
- EP-A1- 2 816 252
- WO-A1-2008/143492
- WO-A2-01/91204
- CN-U- 203 578 656
- DE-A1- 3 127 893
- US-B1- 6 313 551
- LIYI LI ET AL: "Design and analysis of ironless linear electromagnetic launcher with high thrust density for space platform", ELECTROMAGNETIC LAUNCH TECHNOLOGY (EML), 2012 16TH INTERNATIONAL SYMPOSIUM ON, IEEE, 15. Mai 2012 (2012-05-15), Seiten 1-6, XP032456926, DOI: 10.1109/EML.2012.6325160 ISBN: 978-1-4673-0306-4
- WANG TIANYI ET AL: "Modeling, simulation and experiment study of electromagnetic performance for E-Type series linear oscillating motor", 2015 IEEE INTERNATIONAL CONFERENCE ON ADVANCED INTELLIGENT MECHATRONICS (AIM), IEEE, 7 July 2015 (2015-07-07), pages 607-612, XP033210570, DOI: 10.1109/AIM.2015.7222603 [retrieved on 2015-08-25]

## Beschreibung

Die zu Grunde liegende Erfindung betrifft eine Umformmaschine, insbesondere einen Schmiedehammer, mit einem elektromagnetischen Linearmotor.

Ein Schmiedehammer mit Linearantrieb ist beispielsweise aus der DE 20 2008 018 169 U1 bekannt. Bei dem bekannten Schmiedehammer ist ein Hammerbär als Linearläufer eines Linearmotors ausgebildet und weist daran angebrachte Magnete bzw. Sekundärteile auf, die zusammen mit dem Hammerbären in einem stationär ausgebildeten Primärteil längsverschiebbar aufgenommen sind. Zur Ausführung von Schmiedebewegungen wird der als Linearläufer ausgebildete Hammerbär durch entsprechenden Betrieb des Linearmotors auf- und abbewegt, so dass am Fußpunkt der Abbewegung Schmiedeoperationen ausgeführt werden können.

Der bekannte Schmiedehammer im Sinne einer Umformmaschine lässt durchaus Raum für Verbesserungen im Hinblick auf Ausgestaltung und Auslegung des Linearantriebs, insbesondere Linearmotors.

Die US 6,313,551 B1 offenbart für einen Linearmotor eine Magnetanordnung für einen Schaft längs dessen sich ein Läufer des Linearmotors bewegen kann. Die Magnetanordnung umfasst in axialer Richtung des Schafts hintereinander angeordnete Magnete, die bezüglich der axialen Richtung entweder axial oder transversal magnetisiert sind.

Die Druckschrift von Wang Tianyi et al.: "Modeling, simulation and experiment study of electromagnetic performance for E-Type series linear oscillating motor",2015 IEEE International Conference on Advanced Intelligent Mechatronics (AIM), IEEE, 7. Juli 2015 (2015-07-07), Seiten 607-612, XP033210570, DOI: 10.1109/AIM.2015.7222603 offenbart auch eine Halbach Magnetanordnung für einen Linearmotor der in einem Schmiedehammer verwendet werden kann.

Insoweit kann eine Aufgabe der vorliegenden Erfindung darin gesehen werden, bekannte Umformmaschinen, insbesondere Schmiedehämmer, mit elektromagnetischen Linearantrieben im Hinblick auf den Linearantrieb weiterzubilden. Insbesondere soll eine Umformmaschine oder Schmiedehammer angegeben werden mit alternativem und/oder verbessertem elektromagnetischen Linearantrieb.

Diese Aufgabe wird erfindungsgemäß insbesondere gelöst durch eine Umformmaschine mit den Merkmalen nach Patentanspruch 1. Weitere Lösungen, Ausgestaltungen und Varianten der Erfindung ergeben sich insbesondere aus den abhängigen Ansprüchen sowie aus der nachfolgenden Beschreibung beispielhafter Ausgestaltungen und Ausführungsbeispiele.

In der Ausgestaltung nach Patentanspruch 1 ist eine Umformmaschine, beispielsweise in Form eines Schmiedehammers, vorgesehen, welche ausgebildet ist zur Umformung von Werkstücken, beispielsweise metallischen Werkstücken oder Halbzeugen.

Die Umformmaschine umfasst einen zum Antrieb eines Gesenks, z.B. eines Umformwerkzeugs in Form beispielsweise eines Hammerbären, ausgelegten, beispielsweise an einem Gestell festgelegten, elektromagnetischen Linearmotor.

Unter einem Linearmotor soll insbesondere ein Linearantrieb verstanden werden, welcher einen Stator und einen im Stator längsverschiebbar gelagerten Linearläufer umfasst, wobei ein Antrieb des Linearläufers auf Grundlage elektromagnetischer Wechselwirkung zwischen Stator und Linearläufer erfolgt. Linearmotoren dieser Art können beispielsweise als Solenoid-Linearmotoren ausgebildet sein.

Der Linearmotor umfasst mehrere oder eine Vielzahl entlang einer Bewegungsachse eines Linearläufers hintereinander angeordnete und einen Läuferraum für den Linearläufer definierende Spuleneinheiten. Die Spuleneinheiten weisen bevorzugt einen identischen Aufbau auf, und können in Ihrer Gesamtheit den Stator des Linearmotors ausbilden.

Jede Spuleneinheit kann eine oder mehrere Spulen, insbesondere Zylinderspulen, Spulenwicklungen oder Teilspulen umfassen. Bevorzugt weisen die Zylinderspulen im Vergleich zum Durchmesser der Zylinderspule eine kleine axiale Länge auf. Beispielsweise kann bei einem Spulendurchmesser von 480 mm die axiale Länge der Zylinderspulen im Bereich von 20 mm bis 40 mm liegen. Bevorzugter Weise umlaufen die Spulenwicklungen einer jeden Spuleneinheit den Läuferraum, insbesondere in einer zum Läuferraum symmetrischen Anordnung.

Die Spuleneinheiten können derart angeordnet sein, dass deren Polflächen, bzw. die Polflächen der jeweils zugehörigen Spulen quer, insbesondere senkrecht zur Bewegungsachse des Linearläufers, oder Längsachse des Läuferraums ausgerichtet sind.

Als Läuferraum soll insbesondere ein durch die Spuleneinheit/en aufgespanntes Volumen verstanden werden in welchem sich der Linearläufer kollisionsfrei relativ zu den Spuleneinheiten bewegen kann, und in welchem der Linearläufer durch elektromagnetische Felder gesteuert Linearbewegungen ausführen kann.

Insbesondere kann der Läuferraum in Form eines Zylindervolumens ausgebildet sein, welches zumindest abschnittsweise in Richtung der Zylinderachse durch Spulenwicklungen der Spuleneinheiten umgeben, bzw. umlaufen wird. In Ausgestaltungen können die Spuleneinheiten, insbesondere die Spulenwicklungen rotationssymmetrisch zum Läuferraum ausgebildet sein.

Bevorzugter Weise ist/sind die Spuleneinheit/en derart aufgebaut, dass Mittelpunkte der Spulenwicklungen, Flächenschwerpunkte der Spulenwicklungsflächen, oder Flächenschwerpunkte der Polflächen der Spuleneinheit und/oder der Spulen auf einer Bewegungsachse des Linearläufers liegen. Beispielsweise können die Spulenwicklungen derart angeordnet sein, dass Spulenachsen der Spulenwicklungen, oder Normalenachsen der Polflächen kollinear zur Bewegungsachse des Linearläufers verlaufen, d.h. im Wesentlichen kollinear, zueinander sind. Möglich ist es jedoch auch, dass die Spulenachsen oder Normalenachsen gegenüber der Bewegungsachse des Linearläufers verkippt sind.

Unter der Bewegungsachse des Linearläufers soll insbesondere eine durch den Läuferraum verlaufende Achse verstanden werden, welche kollinear ist zu der bei ordnungsgemäßem Betrieb des Linearmotors erzeugten Bewegungstrajektorie des Volumen-, Flächen- oder Massenschwerpunkts des Linearläufers. Insbesondere kann als Bewegungsachse diejenige Achse verstanden werden, entlang welcher sich der Linearläufer, genauer ein Volumen-, Flächen oder Massenschwerpunkt des Linearläufers, bei der Bewegung im Läuferraum des Linearmotors bei ordnungsgemäßem Motorbetrieb bewegen kann.

Die Spuleneinheiten des Linearmotors können als Primärteil mit einem Läuferraum angesehen werden, innerhalb dessen sich der Linearläufer als Sekundärteil in einer linearen Bewegung parallel zur Bewegungsachse bewegen kann.

Die Spuleneinheiten weisen in Richtung der Bewegungsachse eine vorgegebene Spulenpolteilung auf. Die Spulenpolteilung ist bevorzugt für alle Spuleneinheiten gleich.

Unter der Spulenpolteilung einer Spuleneinheit wird der in Axialrichtung einer Spuleneinheit, insbesondere in einer Normalenrichtung der Polflächen der Spuleneinheit, gemessene Polabstand, bzw. Abstand der Polflächen, der Spuleneinheit verstanden.

Umfasst eine Spuleneinheit eine oder mehrere Spulen, und ggf. an den Spulen angeordnete oder damit gekoppelte magnetfeldleitende Elemente bzw. Kerne, so wird unter der Spulenpolteilung insbesondere der in Axialrichtung der Spuleneinheit, insbesondere in einer Normalenrichtung der Spulenflächen gemessene, Polabstand des durch die Spule/n und die Kerne gebildeten Systems verstanden. Die Spulenpolteilung kann identisch sein, oder im Wesentlichen gleich groß sein wie eine in Richtung der Bewegungsachse gemessene axiale Länge einer Spuleneinheit.

Wie bereits erwähnt, kann die Spuleneinheit eine oder mehrere Spulen oder Spulenwicklungen und ggf. mit der oder den Spulen oder Spulenwicklungen verbundene magnetfeldleitende Elemente bzw. Kerne oder Kernelemente oder Kernsegmente umfassen.

Die Kerne können beispielsweise in Axialrichtung, d.h. in Richtung der Spulenachse, unmittelbar benachbart zur Spule oder Spulenwicklung angeordnet sein, derart, dass Austrittsflächen der magnetischen Feldlinien dem Läuferraum zugewandt sind.

Beispielsweise können in einer Richtung parallel zur Spulenachse, ein- oder beiderseits einer Spulenwicklung angeordnete Kerne vorhanden sein, die bezüglich der Bewegungsachse radial ausgerichtet und angebracht sind.

Bevorzugt sind die Kerne bezüglich der Bewegungsachse und/oder bezüglich einer transversalen Mittenebene der jeweiligen Spuleneinheit symmetrisch angeordnet, wobei die Kerne insbesondere derart ausgebildet und angeordnet sein können, dass diese das durch die Spule/n erzeugte Magnetfeld in optimaler Weise in den Läuferraum leiten oder lenken.

In Ausgestaltungen können die Kerne oder Kernelemente in Form von oder nach Art von Schnittbandkernen oder Schnittbandkernelementen ausgebildet sein.

Der Linearläufer gemäß der Ausgestaltung nach Patentanspruch 1 umfasst entlang dessen Längsachse in alternierender Anordnung, einerseits, quer zur Längsachse magnetisierte erste Permanentmagnete mit vorgegebener erster Magnetteilung und, andererseits, parallel zur Längsachse magnetisierte zweite Permanentmagnete mit vorgegebener zweiter Magnetteilung. Bei den Permanentmagneten kann es sich insbesondere um Ringmagnete handeln. Bevorzugt sind die Permanentmagnete in Richtung der Längsachse unmittelbar hintereinander, ggf. unter Zwischenschaltung von beispielsweise zum Ausgleich von Herstellungstoleranzen ausgebildeten, Abstandselementen angeordnet.

Unter der Längsachse soll insbesondere diejenige Achse des Linearläufers verstanden werden, welche bei Betrieb des Linearmotors kollinear zur Bewegungsachse liegt bzw. mit dieser zusammenfällt.

Unter quer zur Längsachse magnetisierten ersten Permanentmagneten soll insbesondere verstanden werden, dass entsprechende erste Permanentmagnete derart ausgebildet und angeordnet sind, dass ihre Magnetisierungsrichtung, insbesondere von Südpol zu Nordpol, quer zur Längsachse des Linearläufers verläuft. Insbesondere kann die Magnetisierungsrichtung senkrecht zur Längsachse verlaufen. Im Falle eines rotationssymmetrischen Linearläufers kann die Magnetisierungsrichtung beispielsweise radial zur Längsachse des Linearläufers ausgerichtet sein.

Entsprechend wird unter in Richtung der Längsachse magnetisierten zweiten Permanentmagneten insbesondere verstanden, dass entsprechende zweite Permanentmagnete derart ausgebildet und angeordnet sind, dass ihre Magnetisierungsrichtung, insbesondere von Südpol zu Nordpol, in Richtung der Längsachse des Linearläufers verläuft. Insbesondere kann die Magnetisierungsrichtung parallel oder im Wesentlichen parallel zur Längsachse, d.h. in oder im Wesentlichen in Axialrichtung, des Linearläufers verlaufen.

Unter dem für die ersten Permanentmagnete anwendbaren Begriff erste Magnetteilung wird die in Richtung der Längsachse gemessene Breite eines ersten Permanentmagneten verstanden, ggf. unter Einbeziehung der anteiligen Breite von Abstandselementen zwischen den ersten und zweiten Permanentmagneten. Die erste Magnetteilung kann beispielsweise der Summe aus axialen Längen eines ersten Permanentmagneten und eines etwaigen Anteils eines zwischen einem ersten und einen unmittelbar benachbarten zweiten Permanentmagneten vorhandenen Zwischenraums entsprechen.

Unter dem für die zweiten Permanentmagnete anwendbaren Begriff zweite Magnetteilung wird die in Richtung der Längsachse gemessene Breite eines zweiten Permanentmagneten verstanden, ggf. unter Einbeziehung der anteiligen Breite von Abstandselementen zwischen den ersten und zweiten Permanentmagneten. Die zweite Magnetteilung kann beispielsweise der Summe aus axialen Längen eines zweiten Permanentmagneten und eines etwaigen Anteils eines zwischen einem ersten und einen unmittelbar benachbarten zweiten Permanentmagneten vorhandenen Zwischenraums entsprechen.

Insbesondere kann die zweite Magnetteilung eines zweiten Permanentmagneten gleich der Magnetpolteilung des zweiten Permanentmagneten sein, wobei unter der Magnetpolteilung des Permanentmagneten insbesondere der in einer Normalenrichtung der Polflächen des Permanentmagneten gemessene, insbesondere effektive, Polabstand, bzw. Abstand der Polflächen, des jeweiligen Permanentmagneten im magnetischen System des Linearläufers verstanden wird.

Unter Verwendung der Magnetpolteilung der zweiten Permanentmagnete kann die erste Magnetteilung eines ersten Permanentmagneten dem in Richtung der Längsachse gemessenen Abstand entsprechen, den dem ersten Permanentmagneten zugewandte Polflächen zweier unmittelbar benachbarter zweiter Permanentmagnete aufweisen. Mit anderen Worten kann die erste Magnetteilung eines zwischen zwei zweiten Permanentmagneten befindlichen ersten Permanentmagneten dem Abstand einander zugewandter Polflächen der zweiten Permanentmagnete entsprechen.

Vorzugsweise sind die erste Magnetteilung, bis auf übliche Toleranzen, bei allen ersten Permanentmagneten gleich, und die zweite Magnetteilung, bis auf übliche Toleranzen, bei allen zweiten Permanentmagneten gleich.

In vorteilhaften Ausgestaltungen kann der Linearläufer als solcher, zumindest jedoch ein durch die Permanentmagnete definierter Magnetabschnitt bezüglich der Längsachse des Linearläufers symmetrisch ausgebildet und aufgebaut sein. Beispielsweise kann der Linearläufer, bzw. der Magnetabschnitt einen zylinder- oder kolbenartigen Aufbau aufweisen.

In der Ausgestaltung nach Patentanspruch 1 ist vorgesehen, dass ein Verhältnis, d.h. ein Quotient, von Spulenpolteilung zu erster Magnetteilung bei etwa 3:1 liegt. Anders ausgedrückt beträgt die Spulenpolteilung etwa das Dreifache der ersten Magnetteilung.

Ferner ist in der Ausgestaltung nach Patentanspruch 1 vorgesehen, dass ein Verhältnis, d.h. ein Quotient, von erster Magnetteilung zu zweiter Magnetteilung bei etwa 2:1 liegt. Mit anderen Worten beträgt die erste Magnetteilung etwa das Doppelte der zweiten Magnetteilung.

Die nach den vorangehenden Magnetanordnungen bzw. Magnetpolanordnungen im Zusammenhang mit der Erfindung beschriebenen Verhältnisse von Spulenpolteilung, erster Magnetteilung und zweiter Magnetteilung haben sich insbesondere für Umformmaschinen, insbesondere Schmiedehämmer als besonders vorteilhaft erwiesen, insbesondere im Hinblick auf Umformenergie und Dynamik der Umformmaschine bzw. Schmiedehammers.

In Ausgestaltungen kann vorgesehen sein, dass jede Spuleneinheit zumindest eine Spulenwicklung, d.h. eine oder mehrere Spulenwicklungen oder Teilspulen; umfasst, wobei jede Spulenwicklung zwei oder mehrere in Normalenrichtung der Spulenachse voneinander beanstandete Spulenwicklungen, insbesondere in Serie und/oder parallel geschaltete, Spulenwicklungen umfassen kann.

Eine quer zur Bewegungsrichtung oder quer zur Längsrichtung des Linearläufers gemessene Spulenfensterhöhe kann zwischen 90 mm und 120 mm betragen, oder bei etwa 105 mm liegen. Unter der Spulenfensterhöhe wird insbesondere eine quer zur Bewegungsrichtung bzw. quer zur Axialrichtung des Linearläufers gemessene Höhe der Spulenwicklung verstanden. Die entsprechende Höhe kann bei beispielsweise kreisförmiger Spulenwicklung ermittelt werden als Differenz zwischen dem größten Radius der jeweiligen Spulenwicklung und dem kleinsten Radius der jeweiligen Spulenwicklung. Allgemeiner formuliert kann die Spulenfensterhöhe als Höhe der Wicklung der Spule quer zur Spulenachse verstanden werden.

In Ausgestaltungen kann vorgesehen sein, dass ein Verhältnis von Spulenpolteilung zu Spulenfensterhöhe zwischen 3:2 und 2:1 liegt.

In Ausgestaltungen, beispielsweise bei Linearhämmern mit einem Arbeitsvermögen von etwa oder gleich 25 kJ, kann ein quer, beispielsweise senkrecht, zur Längsachse des Linearläufers gemessener Außendurchmesser der Permanentmagnete zwischen 90 mm und 110 mm liegen. In Varianten kann der Außendurchmesser etwa 100 mm betragen. Der Durchmesser kann entsprechend des jeweils vorgesehenen Arbeitsvermögens variieren, und so können Linearhämmer mit größeren Arbeitsvermögen als beispielsweise 25 kJ größere Durchmesser aufweisen, und Linearhämmer mit kleineren Arbeitsvermögen können kleinere Durchmesser aufweisen, bzw. in den entsprechenden Dimensionen kleiner ausgebildet sein.

In Ausgestaltungen kann der oder die Spulenkörper und der Linearläufer derart ausgebildet sein, dass ein zwischen Außenumfang des Linearläufers und Innenumfang der Spulenkörper, insbesondere zwischen Innenumfang eines Spulenträgers oder Kerns eines Spulenkörpers, ausgebildeter Abstand zwischen 1,5 mm und 3 mm liegt, beispielsweise 2 mm beträgt. Beispielsweise können mit derartigen Ausgestaltungen bevorzugte Energiedichten erreicht werden.

Mit anderen Worten kann ein zwischen Linearläufer, beispielsweise zwischen Außenumfang oder Außenmantel des Linearläufers oder der Permanentmagnete und den Spuleneinheiten, insbesondere Innendurchmesser oder Innenradius eines Spulenträgers oder Kerns, im Läuferraum gebildeter Luftspalt gemessen quer, insbesondere senkrecht, zur Längsrichtung des Linearläufers eine Breite von 1,5mm bis 3mm, insbesondere etwa 2mm aufweisen. Der Luftspalt kann beispielsweise in Abhängigkeit des Durchmessers des Linearläufers und/oder des/der Spulenkörper/s gewählt sein.

In Ausgestaltungen kann vorgesehen sein, dass die Permanentmagnete an deren Außenumfang eine Beschichtung aufweisen. Die Beschichtung kann beispielsweise nach Zusammenbau des Linearläufers aufgebracht sein, derart, dass zumindest ein Außenmantel oder Außenumfang des durch die Permanentmagnete gebildeten Magnetabschnitts des Linearläufers durch die Beschichtung bedeckt ist. Als Beschichtungsmaterial kann insbesondere eine Harzzusammensetzung verwendet werden.

In Ausgestaltungen kann vorgesehen sein, dass zumindest eine der zumindest einen Spuleneinheit in Richtung der Bewegungsachse oder Längsachse des Linearläufers, vorzugsweise in symmetrischer Anordnung, und/oder bevorzugt beiderseits einer Spulenwicklung oder eines Spulenwickelkörpers der Spuleneinheit angeordnete Kerne, Kernelemente oder Kernsegmente umfasst. Die Kerne, Kernelemente oder Kernsegmente können bezüglich der Bewegungsachse bzw. Längsrichtung des Linearläufers beispielsweise radial stern- oder speichenförmig, insbesondere rotationssymmetrisch, ausgerichtet sein.

Die Kerne, Kernelemente oder Kernsegmente können beispielsweise einen rechteckigen, insbesondere quadratischen, Querschnitt aufweisen, und beispielsweise quaderförmig ausgebildet sein.

Die Kerne, Kernelemente oder Kernsegmente können mit einer Längs- oder Querseite an einer jeweiligen Spulenwicklung anliegen.

Kerne, Kernelemente oder Kernsegmente der Spuleneinheiten können derart miteinander gekoppelt und angebracht sein, dass diese einen U-förmigen Querschnitt aufweisen, und dass deren Magnetfeldaustrittsflächen dem Läuferraum zugewandt sind.

Die Kerne können in Ausgestaltungen als Schnittbandkerne oder Schnittbandkernsegmente ausgebildet sein. Die Kerne können, wie bereits erwähnt, rotationssymmetrisch zur Bewegungsachse oder Längsachse des Linearläufers angeordnet sein. Beispielsweise können unmittelbar benachbarte Kerne oder Kernelemente gegeneinander um einen Winkel von 45 Grad versetzt zueinander angeordnet sein.

Mit der vorgeschlagenen Ausgestaltung der Spulenkörper kann insbesondere ein für Schmiedehämmer geeigneter Stator aufgebaut werden, mit dem für Schmiede- und Umformvorgänge besonders vorteilhafte Bewegungsabläufe und Geschwindigkeitsverläufe erreicht werden können.

In Ausgestaltungen, beispielsweise für Linearhämmer mit einem Arbeitsvermögen von etwa bzw. im Bereich von 25 kJ können die Kerne in Ebenen, die parallel zur und durch die Bewegungsachse verlaufen einen rechteckförmigen, insbesondere quadratischen, Querschnitt aufweisen, vorzugsweise mit einer Kantenlänge im Bereich zwischen 50 mm und 70 mm, insbesondere 60 mm. Ein bezüglich der Bewegungsachse gemessener Außendurchmesser der Kerne kann, beispielsweise bei Linearhämmern mit Arbeitsvermögen von etwa 25 kJ, zwischen 570 mm und 610 mm liegen, oder etwa 600 mm betragen. Ein Innendurchmesser der Kerne kann, beispielsweise bei Linearhämmern mit Arbeitsvermögen von etwa 25 kJ, zwischen 90 mm und 110 mm liegen, oder etwa 104 mm betragen. Linearhämmer mit größerem bzw. kleinerem Arbeitsvermögen können entsprechend größere bzw. kleinere oder entsprechend angepasste Dimensionen oder Abmessungen, betreffend insbesondere die vorweg genannten Parameter wie den Querschnitt, die Kantenlänge, den Außendurchmesser und/oder den Innendurchmesser, aufweisen. Das bedeutet insbesondere, dass die genannten Dimensionen und Parameter in Abhängigkeit der Baugröße, insbesondere des Arbeitsvermögens, angepasst sein können.

In Ausgestaltungen kann der Linearmotor des Weiteren ein zur Kühlung von Spulenwicklungen der Spuleneinheiten ausgebildetes Kühlsystem umfassen. Das Kühlsystem kann beispielsweise fluid-basiert ausgebildet sein, wobei als Kühlfluid ein flüssiges oder gasförmiges Fluid oder Kombinationen daraus verwendet werden kann.

In Ausgestaltungen kann zumindest eine der Spulenwicklungen mit einem Kühlkanal, insbesondere Kühlmittelkanal, des Kühlsystems gekoppelt sein.

In Ausgestaltungen kann es sich bei dem Kühlmittelkanal insbesondere um eine gewickelte, insbesondere spiralförmig gewickelte, Kühlmittelleitung handeln, welche parallel zur Spulenwicklung ausgerichtet und mit der Spulenwicklung thermisch gekoppelt sein kann. Spulenwicklung und Kühlmittelleitungs-Wicklung können in Ausgestaltungen beispielsweise auf einem gemeinsamen Wicklungsträger aufgebracht sein.

In Ausgestaltungen mit Kühlsystem und korrespondierenden Kühlkanälen kann zumindest ein Kühlkanal oder eine Kühlmittelleitungs-Wicklung einer Spuleinheit bezüglich der Bewegungsachse axial und/oder radial zwischen Spulenteilwicklungen gelegen sein. Beispielsweise kann der Kühlkanal mittig zwischen radialen und/oder axialen Spulen(teil)wicklungen gelegen sein, wobei jeder Kühlkanal mit einer Spulenwicklung oder Spulenteilwicklung wärmeleitend in Kontakt sein kann.

In Ausgestaltungen kann eine Spulenwicklungslänge einer jeden Spulenwicklung, insbesondere die Länge des gewickelten Spulendrahts, im Bereich zwischen 1000 m und 1500 m liegen, oder etwa 1300 m betragen. Ein Drahtdurchmesser des Spulendrahts zumindest einer, bevorzugt aller, Spulenwicklungen kann in Ausgestaltungen der Erfindung im Bereich zwischen 1,6 mm und 2,0 mm liegen, oder etwa 1,8 mm betragen. Die genannten Längen und Durchmessern können je nach Art und Größe eines zugehörigen Schmiedehammers verschieden sein, und entsprechend der jeweils erforderlichen Schmiedeleistung bzw. Arbeitsleistung angepasst sein.

In Ausgestaltungen kann die Anzahl der Spuleneinheiten des Linearmotors genau drei, oder ein ganzzahliges Vielfaches von drei, beispielsweise genau sechs, betragen. Insbesondere derartige Anordnungen können für die Realisierung eines Schmiedehammers, beispielsweise Kurzhubschmiedehammers, verwendet werden.

In Ausgestaltungen kann des Weiteren ein den Linearmotor zumindest teilweise einhausendes Gehäuse vorgesehen sein. Beispielsweise kann das Gehäuse derart ausgebildet sein, dass Stator, Linearläufer, Teile eines Kühlsystems und/oder Lüftungssystems zur Kühlung und/oder Belüftung der Spuleneinheiten im Gehäuse aufgenommen sind.

In Ausgestaltungen kann ferner vorgesehen sein, dass jede der Spuleneinheiten mit zumindest einem Haltering, insbesondere Distanzring, mechanisch gekoppelt ist, der wiederum, vorzugsweise anhand von Befestigungsnasen, an einer Wandung oder einem Gehäusemantel des Gehäuses festgelegt ist. Anhand solcher Halte- oder Distanzringe kann eine vergleichsweise einfache Fixierung und Befestigung der Spuleneinheiten erreicht werden.

In Ausgestaltungen kann ferner ein Lüftungssystem vorgesehen sein, welches derart ausgebildet ist, dass die Spuleneinheiten, insbesondere Spulenwicklungen der Spuleneinheiten, über Öffnungen in einer Außenwandung des Gehäuses mit einem Kühlluftstrom beaufschlagt werden können. In Ausgestaltungen kann das Lüftungssystem einen, d.h. zumindest einen, aktiven Lüfter, wie beispielsweise einen Niederdrucklüfter umfassen. Der zumindest eine Lüfter kann derart eingerichtet sein, dass zumindest die Spuleneinheiten und/oder Spulenwicklungen im Gehäuse mit einem kühlenden Luftstrom beaufschlagt werden können.

In Ausgestaltungen kann das Gehäuse des Weiteren Druckausgleichselemente umfassen, welche derart in oder an der Außenwandung des Gehäuses angebracht, oder in dieses integriert sein können, dass beim Betrieb des Schmiedehammers auftretende Druckschwankungen im Gehäuse relativ zum jeweiligen Umgebungsdruck ausgleichbar sind. Druckschwankungen können beispielsweise dadurch entstehen, dass sich der Linearläufer während des Betriebs zumindest teilweise aus dem Gehäuse heraus- und wieder zurückbewegt. Durch entsprechende Druckausgleichselemente kann insbesondere ein stabiler Betrieb des Linearmotors erreicht werden.

In Ausgestaltungen kann der Linearläufer derart eingerichtet sein, dass die ersten und zweiten Permanentmagnete als Ringmagnete ausgebildet, und auf einer die Ringmagnete durchgreifenden Kolbenstange festgelegt, insbesondere verspannt, sind.

Die Ringmagnete können beispielsweise auf die Kolbenstange unter Zwischenschaltung von Abstandselementen aufgefädelt sein. Bei den Abstandselementen kann es sich beispielsweise um Schichtbleche, insbesondere schälbare Schichtbleche handeln.

Die Ringmagnete, und ggf. Abstandselemente, können auf der Kolbenstange beispielsweise durch Spannmuttern in Längsrichtung der Kolbenstange verspannt sein.

Zumindest an einem axialen Ende des Linearläufers kann dieser einen Gleitlagerabschnitt aufweisen. Der Gleitlagerabschnitt kann ein oder mehrere, in Längsrichtung des Linearläufers hintereinander geschaltete Gleitkörper, beispielsweise in Form von Gleit- oder Führungsringen umfassen.

Die Umformmaschine kann ein zum Gleitlagerabschnitt korrespondierend ausgebildetes Linearlager oder eine Linearlagerstruktur, aufweisen, durch welche/s der Linearläufer während des Betriebs geführt ist. Das Linearlager kann an oder in einem Gestell der Umformmaschine und/oder an oder in einem Gehäuseabschnitt, beispielsweise in Form einer Führungsbuchse ausgebildet sein.

An einem axialen Ende des Linearläufers, beispielsweise unmittelbar anschließend an einen Gleitlagerabschnitt, kann ein Befestigungsabschnitt zur Befestigung eines Umformwerkzeugs oder -gesenks ausgebildet sein, wobei das Umformwerkzeug beispielsweise an einem am axialen Ende des Linearläufers, d.h. der Kolbenstange angebrachten bzw. befestigten Hammerbären angebracht sein kann. An einem vom Befestigungsabschnitt abgewandten axialen Ende des Linearläufers kann dieser, z.B. in axial endständiger Lage, eine Anschlagmutter umfassen.

Der Linearläufer kann in Ausgestaltungen beispielsweise einen Aufbau aufweisen, bei welchem in Axialrichtung aufeinanderfolgend ein axial endständiger Befestigungsabschnitt, ein Gleitlagerabschnitt, ein aus ersten und zweiten Permanentmagneten gebildeter Magnetabschnitt und eine axial endständige anschlag- und/oder Spannmutter, angeordnet sind.

Die Permanentmagnete des Magnetabschnitts und Gleitlagerkomponenten des Gleitlagerabschnitts können auf der Kolbenstange aufgefädelt sein, und mit axial endständigen Spannmuttern auf der Kolbenstange in Axialrichtung miteinander verspannt sein.

In Ausgestaltungen können die zweiten Permanentmagnete so angeordnet sein, dass in Richtung der Längsachse des Linearläufers aufeinanderfolgende zweite Permanentmagnete in Richtung der Längsachse entgegengesetzt zueinander magnetisiert sind.

In Ausgestaltungen können die ersten Permanentmagnete so angeordnet sein, dass in Richtung der Längsachse des Linearläufers aufeinanderfolgende erste Permanentmagnete radial zur Längsrichtung entgegengesetzt zueinander magnetisiert sind.

Der Linearläufer kann in Ausgestaltungen beispielsweise eine zylinderförmige Gesamtform aufweisen. Permanentmagnete des Linearläufers können in Ausgestaltungen beispielsweise aus einem Neodym-Eisen-Bor (NdFeB) Werkstoff hergestellt sein.

Ausführungsbeispiele der Erfindung werden nachfolgend anhand der anhängenden Figuren näher beschrieben. Es zeigen:
- FIG. 1: eine Schnittdarstellung einer Umformmaschine;
- FIG. 2: eine erste perspektivische Ansicht eines Linearmotors der Umformmaschine;
- FIG. 3: eine zweite perspektivische Ansicht des Linearmotors;
- FIG. 4: eine perspektivische Ansicht des Linearläufers des Linearmotors;
- FIG. 5: eine perspektivische Ansicht des Stators des Linearmotors;
- FIG. 6: eine perspektivische Ansicht einer Spuleneinheit; und
- FIG. 7: eine schematische Querschnittsdarstellung der Permanentmagnetund Spulenanordnung des Linearmotors; .

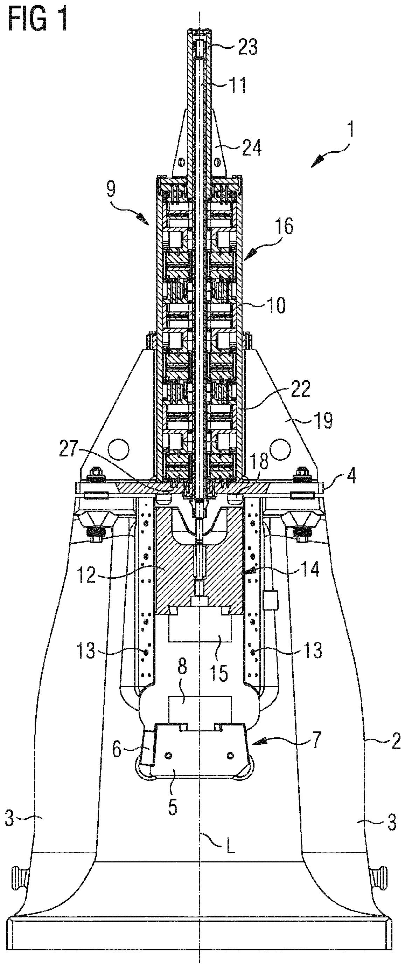

FIG. 1 zeigt eine perspektivische Ansicht einer beispielhaft als Schmiedehammer ausgebildeten Umformmaschine 1. Der Schmiedehammer 1 umfasst ein Hammergestell 2 mit zwei seitlichen Ständern 3 zur Stützung eines Querhaupts 4.

Ein wie in FIG. 1 gezeigter Schmiedehammer 1 kann einen unteren Einsatz 5 umfassen, welcher mittels eines Einsatzkeils 6 im Hammergestell 2 befestigt sein kann, und eine Aufnahme 7, mit beispielsweise zumindest einem Befestigungskeil, für ein unteres Hammergesenk 8 aufweisen.

Der Schmiedehammer 1 umfasst des Weiteren einen am oberen Querhaupt 4 befestigten und abgestützten, Linearmotor 9, bei welchem es sich beispielsweise um einen tubularen Solenoid-Linearmotor 9, insbesondere einen solenoid-permaneterregten Synchron-Linearmotor, handeln kann.

Der als elektrischer Lineartrieb ausgebildete Linearmotor 9 umfasst einen Stator 10 und einen darin in Längsrichtung geführten Linearläufer 11.

Der Linearläufer 11 ist mit einem Bären 12 gekoppelt, welcher wiederum in zwei, an den Ständern 3 ausgebildeten Bär-Führungen 13 geführt ist, so dass der Bär 12 durch den elektrischen Linearmotor 9 auf- und abbewegt werden kann.

An einer vom Linearläufer 11 abgewandten Seite des Bären 12 umfasst dieser eine weitere Aufnahme 14, beispielsweise umfassend zumindest einen Befestigungskeil, mit einem daran befestigten oberen Hammergesenk 15.

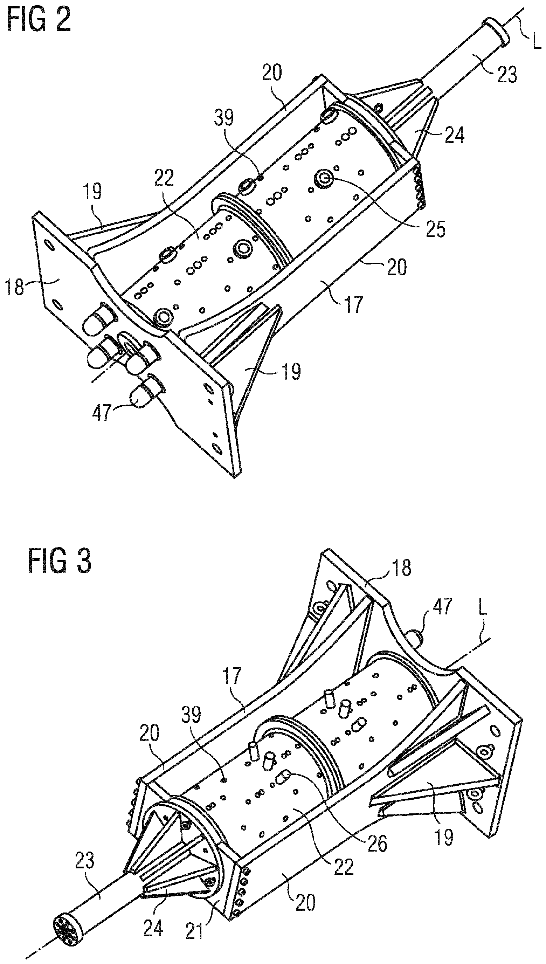

Der Linearmotor 9 ist in einem Gehäuse 16 aufgenommen, welches in perspektivischer Darstellung auch in Figuren 2 und 3 dargestellt ist. Das Gehäuse 16 weist einen modularen Aufbau auf, und umfasst in dem in den Figuren 2 und 3 gezeigten Beispiel einen Gehäuserahmen 17 mit dem Querhaupt 4, und sich von dem Querhaupt 4 erstreckende, und gegenüber dem Querhaupt 4 durch Stützwinkel 19 mechanisch abgestützte Seitenwände 20. An einer vom Querhaupt 4 abgewandten Seite sind die Seitenwände 20 mit einer Deckplatte 21 verbunden.

Der Gehäuserahmen 17 bildet eine Stütz- und Tragstruktur für einen daran befestigten und festgelegten zylinderförmigen Gehäusemantel 22. Der Gehäusemantel 22 kann, wie in FIG. 2 und FIG. 3 gezeigt, mehrere zylindrische Gehäusemantel-Segmente, beispielsweise wie in FIG. 2 und FIG. 3 gezeigt zwei Gehäusemantel-Segmente, umfassen. Je nach Größe des Linearmotors 9 und axialer Baulänge kann die Anzahl der Gehäusemantel-Segmente variieren, und es kann beispielsweise lediglich ein einziges Gehäusemantel-Segment vorhanden sein. Gehäusemantelsegmente können, wie in FIG. 2 und FIG. 3 angedeutet, durch Flanschverbindungen miteinander verbunden sein.

Der Gehäusemantel 22 ist zwischen Querhaupt 4 und Deckplatte 21 angeordnet und mit dem Gehäuserahmen 17 mechanisch verbunden. An der vom Gehäusemantel 22 abgewandten Seite der Deckplatte 21 umfasst das Gehäuse 16 eine Zylinderbuchse 23, welche über weitere Stützwinkel 24 an der Deckplatte abgestützt ist.

Die Zylinderbuchse 23 ist als Linearlagerung für den Linearläufer 9 ausgebildet derart, dass der Linearläufer 9 darin zur Ausführung von Linearbewegungen in Längsrichtung der Zylinderbuchse 23 linear gelagert werden kann, was insbesondere aus der Schnittdarstellung der FIG. 1 ersichtlich ist.

Die Zylinderbuchse 23 ist fluchtend und in Verlängerung einer Bewegungsachse, Laufachse bzw. Führungsachse L des Linearmotors 9 angeordnet, und derart ausgebildet, dass der Linearläufer 11 in dessen Längs- bzw. Axialrichtung geführt und quer zu dessen Längsrichtung abgestützt ist.

An einer von der Deckplatte 21 abgewandten Seite des Linearmotors 9, insbesondere des Gehäuses 16, ist ein Stützlager 27 (siehe FIG. 1) vorhanden. Das Stützlager 27 ist fluchtend mit der Längsachse L und fluchtend zur Zylinderbuchse 23 angeordnet, und derart ausgebildet und eingerichtet, dass der Linearläufer 11 darin in Längsrichtung L geführt, und quer zur Längsrichtung L abgestützt ist.

Durch einen mechanisch vergleichsweise stabilen, und geschlossenen Aufbau des Gehäuses 16 kann ein Schutz elektronischer Komponenten des Linearmotors 9 vor mechanischen Einwirkungen erreicht werden.

Durch den modularen Aufbau des Gehäuses 16 kann erreicht werden, dass im Gehäuse 16 aufgenommene Komponenten, beispielsweise bei ggf. erforderlichen Wartungsarbeiten, vergleichsweise einfach zugänglich sind.

Der Linearmotor 9 ist mit dem Querhaupt 4 am Untergestell des Schmiedehammers 1, sprich den Ständern 3 verbunden. Konkret ist das Querhaupt 4 mit T-förmig ausgebildeten Ständerköpfen der Ständer 3 verschraubt. Zwischen Querhaupt 4 und Ständerköpfen können Positionierelemente und/oder Dämpfer oder Tilgerelemente vorhanden sein. Die Dämpfer oder Tilgerelemente können ausgelegt sein, eine Übertragung von mechanischen Stößen und/oder Schwingungen vom Untergestell auf das Gehäuse 16 und damit auf den mit dem Gehäuse 16 verbundenen Linearmotor 9 zumindest zu dämpfen.

Wie in FIG. 2 und FIG. 3 zu sehen ist, kann der Gehäusemantel 22 beispielsweise Lufteinlassstutzen 25 und Luftauslasselemente mit Schalldämpfern 26 umfassen. Die Lufteinlassstutzen 25 und Schalldämpfer 26 ermöglichen einen Druckausgleich im Gehäuse 16, um ggf. bei der Hin- und Her-Bewegung des Linearläufers 11 im Gehäuse 16 auftretende Druckschwankungen ausgleichen zu können.

Im Betrieb des Schmiedehammers 1 wird der Bär 12 durch entsprechenden Antrieb des Linearläufers 11 durch den Stator 10 des Linearmotors 9 hin- und her-bewegt, bei einer wie gezeigt ausgebildeten Vertikal-Umformmaschine auf- und abbewegt, so dass in einem vom Linearmotor entfernt gelegenen Umkehrpunkt des Bären 12 Schmiedeoperationen an (nicht gezeigten) Werkstücken ausgeführt werden können.

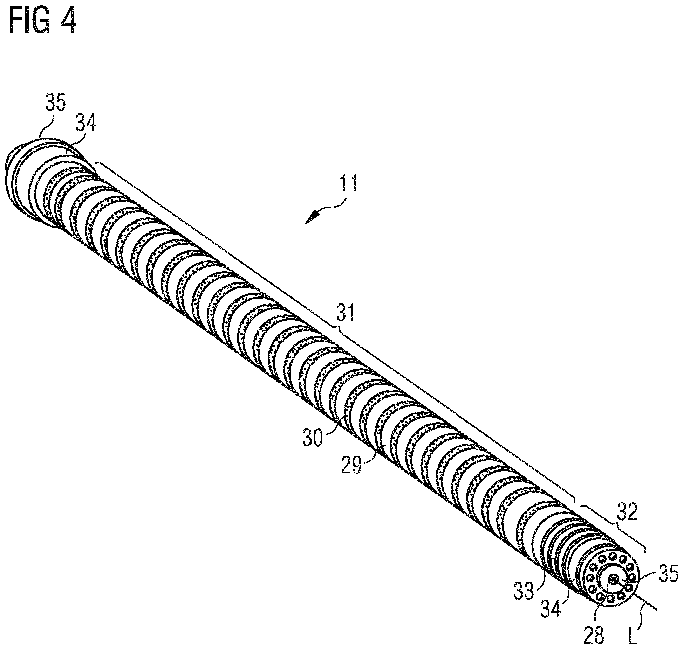

FIG. 4 zeigt den Linearläufer 11 des Linearmotors 9 im Detail. Der Linearläufer 11 umfasst eine Kolbenstange 28, auf welcher erste Permanent-Ringmagnete 29 und zweite Permanent-Ringmagnete 30, d.h. ringförmig ausgebildete Permanentmagnete 29, 30, aufgefädelt sind. Die ersten und zweiten Permanent-Ringmagnete 29, 30 sind in alternierender Reihenfolge angeordnet und bilden einen Magnetabschnitt 31 des Linearläufers 11.

An den Magnetabschnitt 31 des Linearläufers 11 schließt sich in axialer Richtung ein Lagerabschnitt 32 an, der mehrere Ringlagerkomponenten 33, beispielsweise Gleitringe, umfasst. Der Lagerabschnitt 32 ist derart ausgebildet, dass dieser beispielsweise in der Zylinderbuchse 23 geführt werden kann, wobei beispielsweise die Gleitringe in Kontakt mit einer inneren Gleitlagerfläche der Zylinderbuchse 23 sein können.

Zwischen benachbarten Permanentmagneten 29, 30 sind (in FIG. 4 nicht explizit gezeigte) Ringbleche vorhanden, die beispielsweise als schälbare Ringbleche ausgebildet sein können, so dass der gegenseitige Abstand der Permanentmagnete 29, 30 entsprechend den jeweiligen Anforderungen eingestellt werden kann, wobei durch die Ringbleche auch herstellungsbedingte Schwankungen Ringmagnet-Geometrien 29, 30 ausgeglichen werden können.

Die Permanentmagnete 29, 30, ggf. die Ringbleche, und die Ringlagerkomponenten 33 sind mittels axial beiderseits der Kolbenstange 28 vorgesehenen Anschlagmuttern 34 und Spannmuttern 35 auf die Kolbenstange 28 in axialer Richtung verspannt.

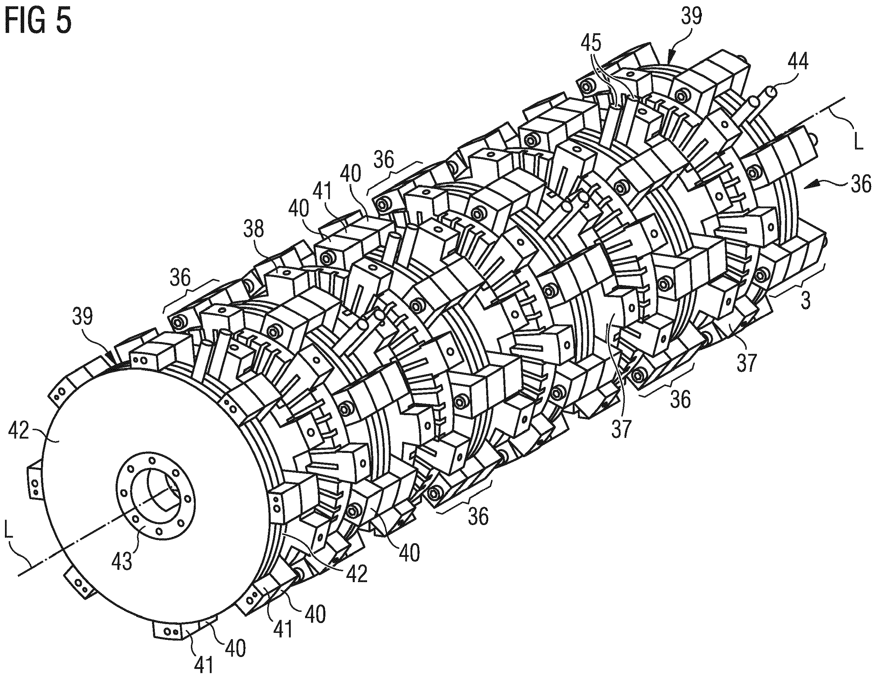

Der Linearläufer 11 ist, wie in FIG. 4 dargestellt zylinderförmig ausgebildet, und weist eine parallel zur Längsachse L gemessene Länge auf, die größer ist als die parallel zur Längsachse gemessene Länge des Stators 10, welcher in FIG. 5 genauer gezeigt ist.

Der Stator 10 nach FIG. 5 ist insgesamt zylinderförmig als solenoider Stator 10 aufgebaut, und weist mehrere in Längsrichtung L hintereinander angeordnete Spuleneinheiten 36 auf.

Jede der Spuleneinheiten 36 kann mit mindestens einem Distanzring 37 gekoppelt sein, mit welchem eine Positionierung der einzelnen Spuleneinheiten 36 im oder am Gehäusemantel 22 ermöglicht wird.

Die Distanzringe 37 sind bevorzugt derart angeordnet und ausgebildet, dass beiderseits einer Spuleneinheit 36 jeweils ein Distanzring 37 vorhanden ist, und so jede der Spuleneinheiten 36 parallel zur Längsrichtung L festgelegt werden kann.

Die Distanzringe 37 umfassen sich radial zur Längsrichtung L erstreckende und bezüglich der Längsachse L in Umfangsrichtung verteilt angeordnete Befestigungsnasen 38. Die Befestigungsnasen 38 dienen als Anschlagelemente zum Anschlagen an die Innenwandung, beispielsweise korrespondierende Befestigungsschnittstellen, des Gehäusemantels 22.

Die Befestigungsnasen 38 umfassen im vorliegenden Beispiel am radial distalen Stirnende jeweils eine Bohrung, die derart ausgebildet ist, dass die Distanzringe 37 mittels den Gehäusemantel 22 durchgreifenden Befestigungselementen, wie z.B. Schrauben 39 (s. FIG. 2, 3), im Gehäusemantel 22, insbesondere an der Innenwandung des Gehäusemantels, festgelegt werden können.

Im verschraubten Zustand wird das distale Stirnende der Befestigungsnase 38 gegen die Innenwandung des Gehäusemantels 22 gepresst, während die Schraube 39 den Gehäusemantel 22 durchgreifend an der Außenwand des Gehäusemantels 22 abgestützt ist.

Der Linearläufer der FIG. 4 umfasst beispielhaft insgesamt sechs Spuleneinheiten 36, wobei die in FIG. 4 vorne links gelegene Spuleneinheit 36 zu Verdeutlichungszwecken lediglich teilweise dargestellt ist, und, wie auch die hinten rechts gelegene Spuleneinheit 36, mit lediglich einem Distanzring 36 gekoppelt ist.

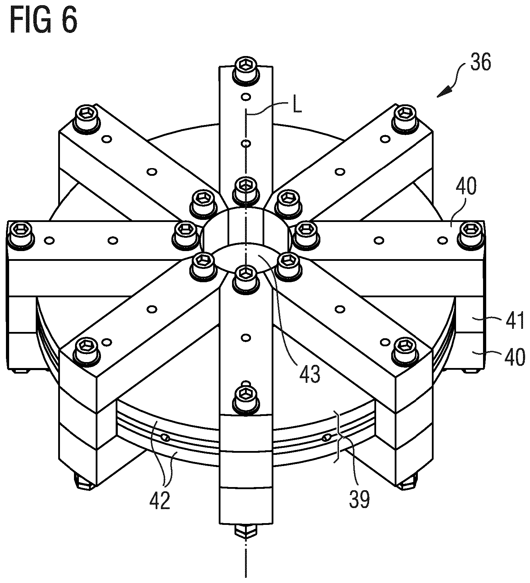

Im Ausführungsbeispiel der FIG. 5, und entsprechend Ausgestaltungen der hierin beschriebenen Erfindung, und wie weiter auch aus FIG. 6 ersichtlich ist, die eine einzelne Spuleneinheit 36 zeigt, umfasst jede Spuleneinheit 36 einen Spulenkörper 39 und beiderseits des Spulenkörpers 39, im vorliegenden Fall sternförmig angeordnete und ausgerichtete, Schnittbandkerne 40, die miteinander verschraubt und auf diese Weise mit dem Spulenkörper 39 verbunden sind.

An bezüglich der Längsachse L radial äußeren Enden sind die Schnittbandkerne 40 über Distanzstücke 41, welche parallel zur Längsachse L den Spulenkörper 39 überbrücken, miteinander verschraubt, so dass sich eine einseitig offene U-förmige Kernstruktur ergibt, deren Magnetfeldaustrittsflächen in der zentralen Durchgangsöffnung der Spuleneinheit 36 münden. Im montierten Zustand (vgl. FIG. 5) münden die Magnetfeldaustrittsflächen in den Läuferraum.

Im Beispiel der Figuren umfasst jede Spuleneinheit 36 insgesamt 16 Schnittbandkerne 40, wobei auf jeder Seite des Spulenkörpers 39 jeweils 8 Schnittbandkerne 40 angeordnet sind. Die Schnittbandkerne 40 sind rotationssymmetrisch zur Längsachse L angeordnet, wobei die Schnittbandkerne 40 bezüglich der Längsachse L um einen Winkel von 45° versetzt zueinander angeordnet sind.

Der Spulenkörper 39 der vorliegenden Ausgestaltung umfasst mehrere, genauer zwei, Teilspulen 42, die als Zylinderspulen ausgebildet sind. Jede Zylinderspule umfasst zumindest eine auf einem Wickelkörper 43 aufgebrachte Spulenwicklung aus Spulendraht.

In Richtung der Längsachse L bezüglich der Zylinderspulen jeweils gegenüberliegend angeordnete Schnittbandkerne 40 sind über die Distanzstücke 41 einerseits und den Wickelkörper 43 andererseits miteinander verbunden, und bilden eine die Spulenwicklungen zumindest teilweise um- oder übergreifende greifende Kernstruktur aus.

Im gezeigten Beispiel nach FIG. 5 und FIG. 6 sind die Zylinderspulen 42, bzw. Teilspulen 42, einer Spuleneinheit 36 parallel zur Längsachse L voneinander beabstandet.

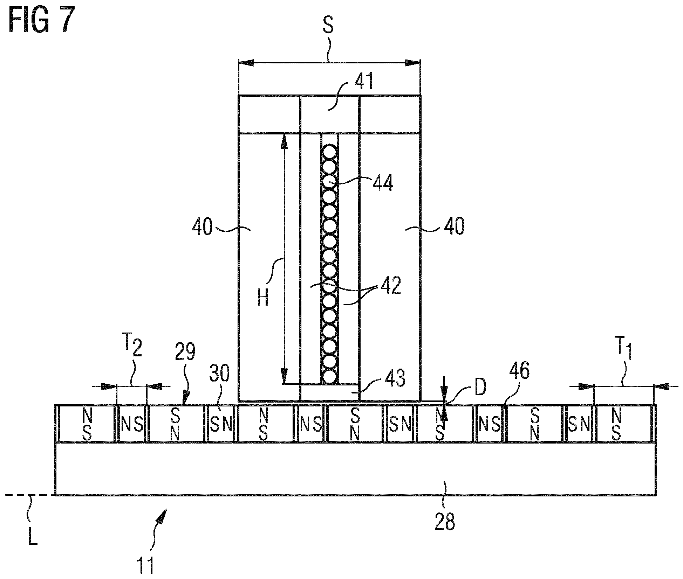

Im Zwischenraum zwischen den Teilspulen 42 ist eine Kühlleitung 44, beispielsweise in Form einer Kühlleitungswicklung (vgl. FIG. 7), ausgebildet. In FIG. 5 sind lediglich zugehörige zu- und abflussseitige Kühlleitungsenden 45 gezeigt, die seitlich, d.h. bezüglich der Längsachse lateral, aus der Spuleneinheit 36 herausgeführt sind, und mit einem entsprechenden (nicht gezeigten) Kühlsystem verbunden werden können.

Durch die entlang der Längsachse L hintereinander und bezüglich der zentralen Durchgangsöffnung der Spuleneinheiten 36 fluchtend angeordneten Spuleneinheiten 36 wird, insbesondere durch die Durchgangsöffnungen der Spuleneinheiten 36, ein Läuferraum definiert, in welchem der Linearläufer 11 bewegt werden kann.

Zur Bewegung des Linearläufers 11 im Stator 10 werden die Spuleneinheiten 36 mit Strom beaufschlagt derart, dass elektromagnetische Felder erzeugt werden, die auf die ersten und zweiten Permanentmagneten 29, 30 einwirken, und so eine Hin- oder Her-Bewegung, eine Abbremsung und/oder Beschleunigung des Linearläufers bewirken.

FIG. 7 zeigt eine schematische Querschnittsdarstellung der Permanentmagnetanordnung und Spulenanordnung des Linearmotors 9. Es sind gezeigt ein Ausschnitt des Linearläufers 11, konkret des Magnetabschnitts 31 des Linearläufers 11, sowie ein Ausschnitt des Stators 10, konkret, ein Ausschnitt einer Spuleneinheit 36 des Stators 10.

Wie aus FIG. 7 ersichtlich ist, sind die ersten Permanent-Ringmagnete 29 und die zweiten Permanent-Ringmagnete 30 auf die Kolbenstange 28 aufgefädelt, wobei zwischen benachbarten Permanent-Ringmagneten 29, 30 jeweils ein Schichtblech 46 zum Toleranzausgleich und/oder zur Anpassung der gegenseitigen Abstände der Permanent-Ringmagnete 29, 30 vorhanden ist.

In dem in FIG. 7 gezeigten Beispiel sind die ersten Permanent-Ringmagnete 29 bezüglich der Längsachse L radial magnetisiert, was insbesondere bedeutet, dass die Magnetfeldrichtung im Inneren der ersten Permanent-Ringmagnete 29 radial orientiert ist.

Die zweiten Permanent-Ringmagnete 30 sind in Richtung der Längsachse L magnetisiert, was insbesondere bedeutet, dass die Magnetfeldrichtung im inneren der zweiten Permanent-Ringmagnete 30 parallel zur Längsrichtung, d.h. bezüglich der Kolbenstange axial, orientiert ist.

In dem in FIG. 7 gezeigten Beispiel sind die ersten Permanent-Ringmagnete 29 abwechselnd radial nach außen und radial nach innen, d.h. in Richtung der Kolbenstange 28 magnetisiert. Die zweiten Permanent-Ringmagnete 30 sind abwechselnd entgegengesetzt zueinander in Richtung der Längsachse L magnetisiert.

Die auf der Kolbenstange 28 angeordneten ersten Permanent-Ringmagnete 29 weisen eine (jeweils im Wesentlichen gleichen) erste Magnetteilung T1 auf, welche der Summe der parallel zur Längsachse L gemessenen Breite eines ersten Permanent-Ringmagneten 29 und der parallel zur Längsachse L gemessenen Breite des angrenzenden Schichtbleches 46 entspricht.

Die auf der Kolbenstange 28 angeordneten zweiten Permanent-Ringmagnete 30 weisen eine (jeweils in Wesentlichen gleiche) zweite Magnetteilung T2 auf, welche der Summe der parallel zur Längsachse L gemessenen Breite eines zweiten Permanent-Ringmagneten 30 und der parallel zur Längsachse L gemessenen Breite des angrenzenden Schichtbleches 46 entspricht.

Die zweite Magnetteilung T2 eines zweiten Permanentmagneten 30 kann insbesondere der Magnetpolteilung, d.h. dem in Richtung der Längsachse L gemessenen, insbesondere effektiven, Polabstand des zweiten Permanentmagneten 30 entsprechen. Unter Verwendung der Magnetpolteilung der zweiten Permanentmagnete 30 ergibt sich, dass die erste Magnetteilung T1 ersten Permanentmagneten 29 dem in Richtung der Längsachse gemessenen Abstand entsprechen kann, den dem ersten Permanentmagneten 29 zugewandte Polflächen zweier unmittelbar benachbarter zweiter Permanentmagnete 30 aufweisen.

Die Spuleneinheit 36 umfasst, wie bereits erwähnt, die beiden Teilspulen 42 und die zwischen den Teilspulen 42 angeordnete Kühlleitung 44, welche auf dem Wickelkörper 43 angeordnet sind. Beiderseits des aus den beiden Teilspulen 42 ausgebildeten Spulenkörpers 39 sind, wie bereits erwähnt, die Schnittbandkerne 40 angeordnet.

Die in FIG. 7 gezeigte Spuleneinheit 36 weist in Richtung der Längsachse L gemessen eine Spulenpolteilung S auf, die dem in Längsrichtung L gemessenen Abstand, insbesondere effektiven Abstand, der Magnetpole oder Polflächen der Spuleneinheit 36 entspricht.

Die Magnet- und Spulenanordnung der in FIG. 7 gezeigten Ausführung ist derart, dass die Spulenpolteilung S (etwa) das 3-fache der ersten Magnetteilung T1 beträgt, und dass die erste Magnetteilung T1 (etwa) das Doppelte der zweiten Magnetteilung T2 beträgt.

Mit anderen Worten liegt ein Verhältnis von Spulenpolteilung S zu erster Magnetteilung T1 bei 3:1, und ein Verhältnis von erster Magnetteilung T1 zu zweiter Magnetteilung T2 bei 2:1.

Eine solche Magnet- und Spulenanordnung hat sich insbesondere für die Anwendung in Umformmaschinen, insbesondere schlagenden Umformmaschinen wie beispielsweise Schmiedehämmern, als besonders vorteilhaft erwiesen.

Die Innendurchmesser der Spuleneinheiten 36, d.h. der Durchmesser der zentralen Durchgangsöffnung der Spuleneinheiten 36 ist derart gewählt, dass zwischen Innenseite der Durchgangsöffnungen und Außendurchmesser des Linearläufers 11 ein vorgegebener Luftspalt D ausgebildet ist. Der Luftspalt kann beispielsweise eine Größe von etwa 2mm aufweisen, wobei ein Außendurchmesser des Linearläufers 11 im Magnetabschnitt 31 beispielsweise 100 mm, und ein Innendurchmesser des Wickelkörpers entsprechend 104 mm aufweisen kann.

Die Spulenpolteilung S kann beispielsweise 180 mm betragen, wobei der Kühlkanal mit Kühlleitung 44 eine in Richtung der Längsachse L gemessene Breite von etwa 20 mm aufweisen kann. Die Teilspulen 42 können in Richtung der Längsachse L jeweils eine Breite von etwa 20 mm aufweisen, und die Schnittbandkerne 40 können eine Breite von etwa 60 mm betragen.

Die Teilspulen 42 können beispielsweise einen Innendurchmesser von ca. 164 mm aufweisen, wobei eine Spulenfensterhöhe von etwa 100 mm oder mehr verwendet werden kann, so dass der Außendurchmesser der Teilspulen 42 etwa 364 mm und mehr betragen kann.

Der Linearläufer 11 kann an dem dem Bären 12 zugewandten Ende einen Kolbenstangenfortsatz aufweisen, an welchem der Bär 12, beispielsweise durch eine Keilverbindung und dgl., angebracht werden kann. Der Kolbenstangenfortsatz kann sich, wie aus FIG. 1 entnommen werden kann, in zurückgezogener Position des Linearläufers 11 zwischen dem Stützlager 27 und dem Bären 12 erstrecken. Der Kolbenstangenfortsatz kann eine am distalen Ende vorgesehene Befestigungsstruktur und eine Entkopplungsstruktur umfassen.

Die Befestigungsstruktur kann in Form eines Keils oder konisch verjüngten Abschnitts ausgebildet, und mittels einer Haltebuchse in einer korrespondierenden Ausnehmung bzw. einem Durchgangs- oder Sackloch des Bären 12 formschlüssig, insbesondere Reibschlüssig, mit dem Bären 12 verbunden sein.

Beim Betrieb des Schmiedehammers 1 wirken bei Schmiedevorgängen, bei welchen der Bär 12 zur Bearbeitung eines Werkstücks hin- und her-bewegt, bzw. auf- und abbewegt wird, und bei welchen in einem Umkehrpunkt des Bären 12 eine Umformung des Werkstücks erfolgt, die Zylinderbuchse 23, das Stützlager 27 und die Entkopplungsstruktur derart zusammen, dass Linearläufer 11 und Bär 12 bezüglich Relativbewegungen des Bären 12 gegenüber dem Linearläufer 11 entkoppelt sind, und der Linearläufer 11 im Stator 10 ordnungsgemäß geführt ist.

Der Magnetabschnitt 32 des Linearläufers 11 kann eine Schutzbeschichtung aufweisen, die beispielsweise aus einem Epoxidharz bestehen oder ein Epoxidharz umfassen kann. Durch eine entsprechende Beschichtung können insbesondere die Permanentmagnete 29, 30 des Magnetabschnitts 32 vor externen Einflüssen geschützt werden.

Die Umformmaschine 1 kann eine (nicht gezeigte) Steuerung aufweisen, mit welcher zumindest die Spuleneinheiten 36 derart gesteuert werden können, dass der Linearläufer 11 im Stator 10 hin- und her-bewegt, beispielsweise auf- und abbewegt, werden kann, und korrespondierende Schmiedebewegungen mit dem Bären 12 ausgeführt werden können.

Eine Schnittstelle des Stators 10 bzw. des Gehäuses 16 mit welcher der Linearmotor 9 am Hammergestell 2 befestigt ist, kann derart ausgebildet sein, dass der, wie hierin beschrieben ausgebildete, Linearantrieb auch bei bereits bestehenden Schmiedehämmern und anderen Umformmaschinen montiert, und nachgerüstet, werden kann.

Um etwaige Beschädigungen des Linearmotors 9, insbesondere Permanent-Ringmagnete 29, 30 des Linearläufers 11 zu vermeiden, oder zumindest weitgehend zu unterbinden, können an einer Unterseite des Querhaupts 4 des Gehäuses 16, wie in FIG. 2 und FIG. 3 gezeigte Anschlagpuffer 47 vorgesehen sein.

### Bezugszeichenliste

- 1: Schmiedehammer
- 2: Hammergestell
- 3: Ständer
- 4: Querhaupt
- 5: Einsatz
- 6: Einsatzkeil
- 7: Aufnahme
- 8: unteres Hammergesenk
- 9: Linearmotor
- 10: Stator
- 11: Linearläufer
- 12: Bär
- 13: Bär-Führung
- 14: weitere Aufnahme
- 15: oberes Hammergesenk
- 16: Gehäuse
- 17: Gehäuserahmen
- 19: Stützwinkel
- 20: Seitenwand
- 21: Deckplatte
- 22: Gehäusemantel
- 23: Zylinderbuchse
- 24: weitere Stützwinkel
- 25: Lufteinlassstutzen
- 26: Schalldämpfer
- 27: Stützlager
- 28: Kolbenstange
- 29: erster Permanent-Ringmagnet
- 30: zweiter Permanent-Ringmagnet
- 31: Magnetabschnitt
- 32: Lagerabschnitt
- 33: Ringlagerkomponente
- 34: Anschlagmutter
- 35: Spannmutter
- 36: Spuleneinheit
- 37: Distanzring
- 38: Befestigungsnase
- 39: Spulenkörper
- 40: Schnittbandkern
- 41: Distanzstück
- 42: Teilspule
- 43: Wickelkörper
- 44: Kühlleitung
- 45: Kühlleitungsenden
- 46: Schichtbleche
- 47: Anschlagpuffer

- L: Längsachse
- T1: erste Magnetteilung
- T2: zweite Magnetteilung
- S: Spulenbreite
- D: Luftspalt
- H: Spulenfensterhöhe

## Patentansprüche

1. Umformmaschine (1), insbesondere Schmiedehammer (1), zur Umformung von Werkstücken umfassend:
- einen zum Antrieb eines Gesenks, insbesondere Hammerbären (12), ausgelegten elektromagnetischen Linearmotor (9),
- wobei der Linearmotor (9) mehrere eine entlang einer Bewegungsachse (L) eines Linearläufers (11) hintereinander angeordnete und einen Läuferraum definierende Spuleneinheiten (36) aufweist, die in Richtung der Bewegungsachse (L) jeweils eine vorgegebene Spulenpolteilung (S) aufweisen,
- wobei die Spulenpolteilung (S) der Spuleneinheit (36) in Richtung der Bewegungsachse gemessener Abstand der Polflächen der Spuleneinheit (36) ist,
- wobei der Linearläufer (11) entlang dessen Längsachse (L) in alternierender Anordnung quer zur Längsachse (L) magnetisierte erste Permanentmagnete (29) mit vorgegebener erster Magnetteilung (T1), und in Richtung der Längsachse (L) magnetisierte zweite Permanentmagnete (30) mit vorgegebener zweiter Magnetteilung (T2) umfasst,
- wobei die erste Magnetteilung (T1) und die zweite Magnetteilung (T2) eine in Richtung der Bewegungsachse (L) gemessene Breite des ersten (29) bzw. zweiten (30) Permanentmagneten ist,
- **dadurch gekennzeichnet, dass**
ein Verhältnis von Spulenpolteilung (S) zu erster Magnetteilung (T1) bei 3:1 liegt, und
- ein Verhältnis von erster Magnetteilung (T1) zu zweiter Magnetteilung (T2) bei 2:1 liegt.

2. Umformmaschine (1) nach Anspruch 1, wobei eine jede Spuleneinheit (36) zumindest eine Spulenwicklung (39, 42), insbesondere mehrere Spulenwicklungen (39, 42), umfasst, bevorzugt mit einer quer zur Bewegungsrichtung gemessenen Spulenfensterhöhe (H), die zwischen 90 mm und 120 mm liegt, oder etwa 105 mm beträgt und/oder wobei ein Verhältnis von Spulenpolteilung (S) zu Spulenfensterhöhe (H) zwischen 3:2 und 2:1 liegt.

3. Umformmaschine (1) nach Anspruch 1 oder 2, wobei ein quer, insbesondere senkrecht, zur Längsachse (L) des Linearläufers (11) gemessener Außendurchmesser der Permanentmagnete (29, 30) zwischen 90 mm und 110 mm liegt, oder etwa 100 mm beträgt, wobei die Arbeitsleistung der Umformmaschine bevorzugt etwa 25 kJ beträgt.

4. Umformmaschine (1) nach einem der Ansprüche 1 bis 3, wobei die Spulenkörper und der Linearläufer derart ausgebildet und angeordnet sind, dass ein zwischen Linearläufer (11) und Spuleneinheiten (36) im Läuferraum gebildeter Luftspalt (D) quer zur Längsrichtung (L) eine Breite von 1,5 mm bis 3 mm aufweist, insbesondere etwa 2 mm breit ist und/oder wobei die Permanentmagnete (29, 30) an deren Außenumfang eine Beschichtung aufweisen, insbesondere derart, dass zumindest ein Außenmantel oder Außenumfang des durch die Permanentmagnete (29, 30) gebildeten Magnetabschnitts des Linearläufers (11) durch die Beschichtung bedeckt ist.

5. Umformmaschine (1) nach einem der Ansprüche 1 bis 4, wobei zumindest eine der zumindest einen Spuleneinheit (36) in Richtung der Bewegungsachse (L) beiderseits einer Spulenwicklung (42) der Spuleneinheit (36) angeordnete, bezüglich der Bewegungsachse (L) bevorzugt radial sternförmig ausgerichtete Kerne (40) umfasst, welche bevorzugt als Schnittbandkerne (40) ausgebildet sind, wobei die Kerne (40) bevorzugt rotationssymmetrisch zur Bewegungsachse (L) angeordnet sind, und wobei in Umfangsrichtung unmittelbar benachbarte Kerne (40) gegeneinander bevorzugt um einen Winkel von 45 Grad versetzt zueinander angeordnet sind.

6. Umformmaschine nach Anspruch 5, wobei die Kerne (40) in Ebenen, die parallel zur und durch die Bewegungsachse (L) verlaufen einen rechteckförmigen, insbesondere quadratischen, Querschnitt aufweisen, vorzugsweise mit einer Kantenlänge im Bereich zwischen 50 mm und 70 mm, insbesondere 60 mm, und wobei bevorzugt ein bezüglich der Bewegungsachse (L) gemessener Außendurchmesser der Kerne (40) zwischen 570 mm und 610 mm liegt, oder etwa 600 mm beträgt, und ein Innendurchmesser der Kerne (40) bevorzugt zwischen 90 mm und 110 mm liegt, oder etwa 104 mm beträgt, wobei die Arbeitsleistung der Umformmaschine bevorzugt etwa 25 kJ beträgt.

7. Umformmaschine (1) nach einem der Ansprüche 1 bis 6, wobei der Linearmotor (9) des Weiteren ein zur Kühlung von Spulenwicklungen (39) der Spuleneinheiten (36) ausgebildetes Kühlsystem umfasst, wobei bevorzugt zumindest eine der Spulenwicklungen (39) mit einem Kühlkanal (44), insbesondere Kühlmittelkanal, des Kühlsystems gekoppelt ist, bevorzugt derart, dass der Kühlkanal (44) in axialer und/oder radialer Richtung bezüglich der Bewegungsachse (L) zwischen Spulenteilwicklungen (42) gelegen ist und mit den Spulenteilwicklungen (42) wärmeleitend in Kontakt ist, wobei der Kühlkanal (44) optional als eine gewickelte, insbesondere spiralförmig gewickelte, Kühlmittelleitung ausgebildet ist, welche parallel zur Spulenwicklung (39) ausgerichtet und mit der Spulenwicklung thermisch gekoppelt ist, wobei optional Spulenwicklung (39) und Kühlmittelleitungs-Wicklung auf einem gemeinsamen Wicklungsträger aufgebracht sind, wobei weiter optional zumindest ein Kühlkanal (44) oder eine Kühlmittelleitungs-Wicklung einer Spuleinheit (36) bezüglich der Bewegungsachse (L) axial und/oder radial zwischen Spulenteilwicklungen gelegen sein, und/oder wobei der Kühlkanal (44) optional mittig zwischen radialen und/oder axialen Spulenwicklungen (39) oder Spulenteilwicklungen (42) gelegen ist, und jeder Kühlkanal (44) mit einer Spulenwicklung (39) oder Spulenteilwicklung (42) wärmeleitend in Kontakt ist.

8. Umformmaschine (1) nach einem der Ansprüche 1 bis 7, wobei eine Spulenwicklungslänge einer jeden Spulenwicklung (42) im Bereich zwischen 1000m und 1500m liegt, oder etwa 1300m beträgt und/oder wobei ein Drahtdurchmesser eines Spulendrahts zumindest einer, bevorzugt aller, Spulenwicklungen (42) im Bereich zwischen 1,6mm und 2,0mm liegt, oder etwa 1,8mm beträgt, wobei die Arbeitsleistung der Umformmaschine bevorzugt etwa 25 kJ beträgt.

9. Umformmaschine (1) nach einem der Ansprüche 1 bis 8, wobei die Anzahl der Spuleneinheiten (36) des Linearmotors (9) genau drei, oder ein ganzzahliges Vielfaches von drei, insbesondere genau sechs, beträgt.

10. Umformmaschine (1) nach einem der Ansprüche 1 bis 9, umfassend des Weiteren ein den Linearmotor (9) zumindest teilweise einhausendes Gehäuse (16), und bevorzugt ferner ein Lüftungssystem, welches derart ausgebildet ist, dass die Spuleneinheiten (36), insbesondere Spulenwicklungen der Spuleneinheiten (36), über Öffnungen (25) in einer Außenwandung des Gehäuses (16) mit einem Kühlluftstrom beaufschlagbar sind, wobei das Lüftungssystem bevorzugt einen aktiven Lüfter, insbesondere Niederdrucklüfter, zur Erzeugung des Kühlluftstroms umfasst.

11. Umformmaschine (1) nach Anspruch 10, wobei das Gehäuse (16) des Weiteren Druckausgleichselemente (26) umfasst, welche derart in oder an der Außenwandung des Gehäuses (16) angebracht, oder in dieses integriert sind, dass beim Betrieb der Umformmaschine auftretende Druckschwankungen im Gehäuse (16) relativ zum jeweiligen Umgebungsdruck ausgleichbar sind.

12. Umformmaschine (1) nach einem der Ansprüche 1 bis 11, wobei jede Spuleneinheit (36) mit zumindest einem Haltering (37), insbesondere Distanzring, mechanisch gekoppelt ist, der wiederum an einem Gehäusemantel (22) des Gehäuses (16) festgelegt ist.

13. Umformmaschine (1) nach einem der Ansprüche 1 bis 12, umfassend den elektrischen Linearmotor (9) mit dem Linearläufer (11), wobei die ersten (29) und zweiten Permanentmagnete (30) als Ringmagnete ausgebildet sind, und auf einer die Ringmagnete durchgreifenden Kolbenstange (28) festgelegt, insbesondere verspannt, sind.

14. Umformmaschine nach Anspruch 13, wobei an einem axialen Ende der Kolbenstange des Linearläufers ein Hammerbär befestigt ist, an dem ein Umformwerkzeug angebracht ist und/oder am anderen axialen Ende der Kolbenstange die Ringmagnete unter Zwischenschaltung von Abstandselementen auf die Kolbenstange aufgefädelt sind, wobei die Abstandselemente optional als Schichtbleche ausgebildet sind, und wobei weiter optional die Ringmagnete und die Abstandselemente durch Spannmuttern in Längsrichtung der Kolbenstange verspannt sind.

15. Umformmaschine (1) nach einem der Ansprüche 1 bis 14, wobei in Richtung der Längsachse (L) aufeinanderfolgende zweite Permanentmagnete (29) in Richtung der Längsachse (L) entgegengesetzt zueinander magnetisiert sind, und/oder wobei in Richtung der Längsachse (L) aufeinanderfolgende erste Permanentmagnete (30) radial zur Längsrichtung entgegengesetzt zueinander magnetisiert sind.

16. Umformmaschine (1) nach einem der Ansprüche 1 bis 15, wobei die Permanentmagnete (29, 30) aus einem Neodym-Eisen-Bor (NdFeB) Werkstoff hergestellt sind, und/oder wobei zumindest ein axiales Ende des Linearläufers (11) einen Gleitlagerabschnitt (32) aufweist, wobei der Gleitlagerabschnitt (32) optional ein oder mehrere, in Längsrichtung des Linearläufers (11) hintereinander geschaltete Gleitkörper (33), insbesondere in Form von Gleit- oder Führungsringen (33) umfasst, und wobei die Umformmaschine (1) eine zum Gleitlagerabschnitt (32) korrespondierend ausgebildete Linearlagerstruktur aufweist, durch welche der Linearläufer (11) während des Betriebs geführt ist, und wobei optional an einem axialen Ende des Linearläufers (11), insbesondere unmittelbar anschließend an den Gleitlagerabschnitt (32), ein Befestigungsabschnitt zur Befestigung eines Umformwerkzeugs oder -gesenks ausgebildet ist.

## Claims

1. Forming machine (1), in particular forging hammer (1), for forming workpieces comprising:
- an electromagnetic linear motor (9) designed to drive a die, in particular a hammer bear (12),
- wherein the linear motor (9) has a plurality of coil units (36) which are arranged one behind the other along a movement axis (L) of a linear rotor (11) and define a rotor space and which each have a predetermined coil pole pitch (S) in the direction of the movement axis (L),
- wherein the coil pole pitch (S) of the coil unit (36) in the direction of the axis of movement is the measured distance between the pole faces of the coil unit (36),
- wherein the linear rotor (11) comprises, along its longitudinal axis (L) in alternating arrangement, first permanent magnets (29) magnetised transversely to the longitudinal axis (L) with a predetermined first magnetic pitch (T1), and second permanent magnets (30) magnetised in the direction of the longitudinal axis (L) with a predetermined second magnetic pitch (T2),
- wherein the first magnetic pitch (T1) and the second magnetic pitch (T2) is a width of the first (29) and second (30) permanent magnets, respectively, measured in the direction of the axis of movement (L), **characterised in that**
- a ratio of coil pole pitch (S) to first magnet pitch (T1) is 3:1, and
- a ratio of first magnet pitch (T1) to second magnet pitch (T2) is 2:1.

2. Forming machine (1) according to claim 1, wherein each coil unit (36) comprises at least one coil winding (39, 42), in particular several coil windings (39, 42), preferably with a coil window height (H), measured transversely to the direction of movement, which is between 90 mm and 120 mm, or is about 105 mm, and/or wherein a ratio of coil pole pitch (S) to coil window height (H) is between 3:2 and 2:1.

3. Forming machine (1) according to claim 1 or 2, wherein an outer diameter of the permanent magnets (29, 30) measured transversely, in particular perpendicularly, to the longitudinal axis (L) of the linear rotor (11) is between 90 mm and 110 mm, or is about 100 mm, wherein the working power of the forming machine is preferably about 25 kJ.

4. Forming machine (1) according to any of claims 1 to 3, wherein the coil units and the linear rotor are formed and arranged in such a way that an air gap (D) formed between the linear rotor (11) and the coil units (36) in the rotor space transversely to the longitudinal direction (L) has a width of 1.5 mm to 3 mm, in particular about 2 mm wide, and/or wherein the permanent magnets (29, 30) have a coating on their outer circumference, in particular in such a way that at least an outer casing or outer circumference of the magnet section of the linear rotor (11) formed by the permanent magnets (29, 30) is covered by the coating.

5. Forming machine (1) according to any of claims 1 to 4, wherein at least one of the at least one coil unit (36) comprises cores (40) which are arranged in the direction of the axis of movement (L) on both sides of a coil winding (42) of the coil unit (36) and are preferably aligned radially in a star shape with respect to the axis of movement (L), which are preferably designed as cut strip cores (40), the cores (40) preferably being arranged rotationally symmetrically with respect to the axis of movement (L), and directly adjacent cores (40) in the circumferential direction preferably being arranged offset with respect to one another by an angle of 45 degrees.

6. Forming machine according to claim 5, wherein the cores (40) have a rectangular, in particular square, cross-section in planes running parallel to and through the axis of movement (L), preferably with an edge length in the range between 50 mm and 70 mm, in particular 60 mm, and wherein preferably an outer diameter of the cores (40) measured with respect to the axis of movement (L) is between 570 mm and 610 mm, or is about 600 mm, and an inner diameter of the cores (40) is preferably between 90 mm and 110 mm, or is about 104 mm, wherein the working power of the forming machine is preferably about 25 kJ.

7. Forming machine (1) according to any of claims 1 to 6, wherein the linear motor (9) further comprises a cooling system designed for cooling coil windings (39) of the coil units (36), wherein preferably at least one of the coil windings (39) is coupled to a cooling channel (44), in particular coolant channel, of the cooling system, preferably in such a way that the cooling channel (44) is located between coil part windings (42) in the axial and/or radial direction with respect to the axis of movement (L) and is in thermally conductive contact with the coil part windings (42), the cooling channel (44) optionally being designed as a wound, in particular spirally wound, coolant conduit which is aligned parallel to the coil winding (39) and is thermally coupled to the coil winding, wherein optionally coil winding (39) and coolant line winding are applied to a common winding carrier, wherein further optionally at least one cooling channel (44) or a coolant line winding of a coil unit (36) is located axially and/or radially between coil part windings with respect to the axis of movement (L), and/or wherein the cooling channel (44) is optionally located centrally between radial and/or axial coil windings (39) or coil part windings (42), and each cooling channel (44) is in thermally conductive contact with a coil winding (39) or coil part winding (42).

8. Forming machine (1) according to any of claims 1 to 7, wherein a coil winding length of each coil winding (42) is in the range between 1000 m and 1500 m, or is about 1300 m and/or wherein a wire diameter of a coil wire of at least one, preferably all, coil windings (42) is in the range between 1.6 mm and 2.0 mm, or is about 1.8 mm, wherein the working power of the forming machine is preferably about 25 kJ.

9. Forming machine (1) according to any of claims 1 to 8, wherein the number of coil units (36) of the linear motor (9) is exactly three, or an integral multiple of three, in particular exactly six.

10. Forming machine (1) according to any of claims 1 to 9, further comprising a housing (16) at least partially enclosing the linear motor (9), and preferably further comprising a ventilation system which is designed in such a way that the coil units (36), in particular coil windings of the coil units (36), can be acted upon by a cooling air flow via openings (25) in an outer wall of the housing (16), in particular coil windings of the coil units (36), can be acted upon by a cooling air flow via openings (25) in an outer wall of the housing (16), the ventilation system preferably comprising an active fan, in particular a low-pressure fan, for generating the cooling air flow.

11. Forming machine (1) according to claim 10, wherein the housing (16) further comprises pressure compensation elements (26) which are mounted in or on the outer wall of the housing (16) or integrated therein in such a way that pressure fluctuations occurring in the housing (16) during operation of the forming machine can be compensated relative to the respective ambient pressure.

12. Forming machine (1) according to any of claims 1 to 11, wherein each coil unit (36) is mechanically coupled to at least one retaining ring (37), in particular spacer ring, which in turn is fixed to a housing shell (22) of the housing (16).

13. Forming machine (1) according to any of claims 1 to 12, comprising the electric linear motor (9) with the linear rotor (11), wherein the first (29) and second permanent magnets (30) are formed as ring magnets and are fixed, in particular braced, on a piston rod (28) engaging through the ring magnets.

14. Forming machine according to claim 13, wherein a hammer bear is attached to one axial end of the piston rod of the linear runner, to which hammer bear a forming tool is attached, and/or the ring magnets are threaded onto the piston rod at the other axial end of the piston rod with spacer elements interposed, wherein the spacer elements are optionally in the form of laminations, and wherein further optionally the ring magnets and the spacer elements are clamped by clamping nuts in the longitudinal direction of the piston rod.

15. Forming machine (1) according to any of claims 1 to 14, wherein successive second permanent magnets (29) in the direction of the longitudinal axis (L) are magnetised opposite to each other in the direction of the longitudinal axis (L), and/or wherein successive first permanent magnets (30) in the direction of the longitudinal axis (L) are magnetised opposite to each other radially to the longitudinal direction.

16. Forming machine (1) according to any of claims 1 to 15, wherein the permanent magnets (29, 30) are made of a neodymium-iron-boron (NdFeB) material, and/or wherein at least one axial end of the linear rotor (11) has a slide bearing section (32), wherein the slide bearing section (32) optionally comprises one or more slide bodies (33), in particular in the form of slide or guide rings (33), connected in series in the longitudinal direction of the linear rotor (11), and wherein the forming machine (1) has a linear bearing structure which corresponds to the slide bearing section (32) and through which the linear rotor (11) is guided during operation, and wherein optionally a fastening section for fastening a forming tool or die is formed at an axial end of the linear rotor (11), in particular directly adjacent to the slide bearing section (32).

## Revendications

1. Machine de formage (1), en particulier marteau de forgeage (1), pour le formage de pièces à usiner, comprenant:
- un moteur linéaire électromagnétique (9) conçu pour l'entraînement d'une matrice, en particulier d'une masse de marteau (12),
- le moteur linéaire (9) présentant plusieurs unités de bobines (36) disposées les unes derrière les autres le long d'un axe de déplacement (L) d'un rotor linéaire (11) et définissant un espace de rotor, lesquelles unités de bobines présentent chacune un pas polaire de bobine (S) prédéfini dans la direction de l'axe de déplacement (L),
- dans lequel le pas polaire de bobine (S) de l'unité de bobine (36) est la distance mesurée entre les surfaces polaires de l'unité de bobine (36) dans la direction de l'axe de déplacement,
- le rotor linéaire (11) comprenant, le long de son axe longitudinal (L) dans une disposition alternée, des premiers aimants permanents (29) magnétisés transversalement à l'axe longitudinal (L) avec un premier pas magnétique (T1) prédéfini, et des deuxièmes aimants permanents (30) magnétisés dans la direction de l'axe longitudinal (L) avec un deuxième pas magnétique (T2) prédéfini,
- dans lequel le premier pas magnétique (T1) et le deuxième pas magnétique (T2) sont une largeur, mesurée dans la direction de l'axe de déplacement (L), du premier (29) et du deuxième (30) aimants permanents, respectivement,
**caractérisé en ce que**
- un rapport du pas polaire de la bobine (S) au premier pas magnétique (T1) est de 3:1, et
- un rapport entre la première division magnétique (T1) et la deuxième division magnétique (T2) est de 2:1.

2. Machine de formage (1) selon la revendication 1, dans laquelle chaque unité de bobine (36) comprend au moins un enroulement de bobine (39, 42), en particulier plusieurs enroulements de bobine (39, 42), de préférence avec une hauteur de fenêtre de bobine (H) mesurée transversalement à la direction de déplacement, qui est comprise entre 90 mm et 120 mm, ou est d'environ 105 mm et/ou dans laquelle un rapport entre le pas polaire de bobine (S) et la hauteur de fenêtre de bobine (H) est compris entre 3:2 et 2:1.

3. Machine de formage (1) selon la revendication 1 ou 2, dans laquelle un diamètre extérieur des aimants permanents (29, 30), mesuré transversalement, en particulier perpendiculairement, à l'axe longitudinal (L) du rotor linéaire (11), est compris entre 90 mm et 110 mm, ou est d'environ 100 mm, la puissance de travail de la machine de formage étant de préférence d'environ 25 kJ.

4. Machine de formage (1) selon l'une des revendications 1 à 3, dans laquelle les corps de bobines et le rotor linéaire sont conçus et disposés de telle sorte qu'un entrefer (D) formé entre le rotor linéaire (11) et les unités de bobines (36) dans l'espace du rotor présente une largeur de 1,5 mm à 3 mm transversalement à la direction longitudinale (L), en particulier d'environ 2 mm et/ou les aimants permanents (29, 30) présentant un revêtement sur leur périphérie extérieure, en particulier de telle sorte qu'au moins une enveloppe extérieure ou une périphérie extérieure de la section magnétique du rotor linéaire (11) formée par les aimants permanents (29, 30) soit recouverte par le revêtement.

5. Machine de formage (1) selon l'une des revendications 1 à 4, dans laquelle au moins l'une des au moins une unité de bobines (36) comprend des noyaux (40) disposés dans la direction de l'axe de déplacement (L) de part et d'autre d'un enroulement de bobine (42) de l'unité de bobines (36) et orientés de préférence radialement en étoile par rapport à l'axe de déplacement (L), qui sont de préférence réalisés sous forme de noyaux en bande coupée (40), les noyaux (40) étant disposés de préférence à symétrie de révolution par rapport à l'axe de déplacement (L), et des noyaux (40) directement voisins dans la direction périphérique étant disposés de préférence décalés les uns par rapport aux autres d'un angle de 45 degrés.

6. Machine de formage selon la revendication 5, dans laquelle les noyaux (40) présentent, dans des plans parallèles à l'axe de mouvement (L) et passant par celui-ci, une section transversale rectangulaire, en particulier carrée, de préférence avec une longueur d'arête dans la plage comprise entre 50 mm et 70 mm, en particulier 60 mm, et où de préférence un diamètre extérieur des noyaux (40) mesuré par rapport à l'axe de mouvement (L) est compris entre 570 mm et 610 mm, ou est d'environ 600 mm, et un diamètre intérieur des noyaux (40) est de préférence compris entre 90 mm et 110 mm, ou est d'environ 104 mm, la puissance de travail de la machine de formage étant de préférence d'environ 25 kJ.

7. Machine de formage (1) selon l'une des revendications 1 à 6, dans laquelle le moteur linéaire (9) comprend en outre un système de refroidissement conçu pour refroidir des enroulements de bobine (39) des unités de bobine (36), de préférence au moins l'un des enroulements de bobine (39) étant couplé à un canal de refroidissement (44), en particulier un canal de fluide de refroidissement, du système de refroidissement, de préférence de telle sorte que le canal de refroidissement (44) est situé dans la direction axiale et/ou radiale par rapport à l'axe de déplacement (L) entre des enroulements partiels de bobine (42) et est en contact de conduction thermique avec les enroulements partiels de bobine (42), le canal de refroidissement (44) étant réalisé en option sous la forme d'une conduite de réfrigérant enroulée, en particulier enroulée en spirale, qui est orienté parallèlement à l'enroulement de bobine (39) et est couplé thermiquement à l'enroulement de bobine, l'enroulement de bobine (39) et l'enroulement de la conduite de fluide de refroidissement étant éventuellement montés sur un support d'enroulement commun, au moins un canal de refroidissement (44) ou un enroulement de la conduite de fluide de refroidissement d'une unité de bobine (36) étant en outre éventuellement situé axialement et/ou radialement entre des enroulements partiels de bobine par rapport à l'axe de déplacement (L), et/ou le canal de refroidissement (44) étant situé en option au milieu entre des enroulements de bobine (39) ou des enroulements partiels de bobine (42) radiaux et/ou axiaux, et chaque canal de refroidissement (44) étant en contact de conduction thermique avec un enroulement de bobine (39) ou un enroulement partiel de bobine (42).

8. Machine de formage (1) selon l'une quelconque des revendications 1 à 7, dans laquelle une longueur d'enroulement de bobine de chaque enroulement de bobine (42) est comprise entre 1000m et 1500m, ou est d'environ 1300m, et/ou dans laquelle un diamètre de fil d'un fil de bobine d'au moins un, de préférence de tous les enroulements de bobine (42), est compris entre 1,6mm et 2,0mm, ou est d'environ 1,8mm, la puissance de travail de la machine de formage étant de préférence d'environ 25 kJ.

9. Machine de formage (1) selon l'une des revendications 1 à 8, dans laquelle le nombre d'unités de bobines (36) du moteur linéaire (9) est exactement de trois, ou un multiple entier de trois, en particulier exactement de six.

10. Machine de formage (1) selon l'une des revendications 1 à 9, comprenant en outre un boîtier (16) enfermant au moins partiellement le moteur linéaire (9), et de préférence en outre un système de ventilation qui est conçu de telle sorte que les unités de bobines (36), en particulier des enroulements de bobines des unités de bobines (36), peuvent être alimentés en courant d'air de refroidissement par des ouvertures (25) dans une paroi extérieure du boîtier (16), le système de ventilation comprenant de préférence un ventilateur actif, en particulier un ventilateur basse pression, pour générer le courant d'air de refroidissement.

11. Machine de formage (1) selon la revendication 10, dans laquelle le carter (16) comprend en outre des éléments de compensation de pression (26) qui sont placés dans ou sur la paroi extérieure du carter (16), ou sont intégrés dans celui-ci, de telle sorte que les variations de pression qui se produisent dans le carter (16) lors du fonctionnement de la machine de formage peuvent être compensées par rapport à la pression ambiante respective.

12. Machine de formage (1) selon l'une des revendications 1 à 11, dans laquelle chaque unité de bobine (36) est couplée mécaniquement à au moins une bague de maintien (37), notamment une bague d'écartement, qui est elle-même fixée à une enveloppe (22) du boîtier (16).

13. Machine de formage (1) selon l'une des revendications 1 à 12, comprenant le moteur électrique linéaire (9) avec le rotor linéaire (11), les premiers (29) et deuxièmes aimants permanents (30) étant conçus comme des aimants annulaires et étant fixés, en particulier serrés, sur une tige de piston (28) traversant les aimants annulaires.

14. Machine de formage selon la revendication 13, dans laquelle à une extrémité axiale de la tige de piston du rotor linéaire est fixé un marteau sur lequel est monté un outil de formage et/ou à l'autre extrémité axiale de la tige de piston les aimants annulaires sont enfilés sur la tige de piston avec interposition d'éléments d'écartement, les éléments d'écartement étant réalisés en option sous forme de tôles stratifiées, et dans laquelle en outre en option les aimants annulaires et les éléments d'écartement sont serrés par des écrous de serrage dans la direction longitudinale de la tige de piston.

15. Machine de formage (1) selon l'une des revendications 1 à 14, dans laquelle des deuxièmes aimants permanents (29) se succédant dans la direction de l'axe longitudinal (L) sont aimantés en sens inverse les uns des autres dans la direction de l'axe longitudinal (L), et/ou dans laquelle des premiers aimants permanents (30) se succédant dans la direction de l'axe longitudinal (L) sont aimantés en sens inverse les uns des autres radialement par rapport à la direction longitudinale.

16. Machine de formage (1) selon l'une des revendications 1 à 15, dans laquelle les aimants permanents (29, 30) sont fabriqués en un matériau néodyme-fer-bore (NdFeB), et/ou dans laquelle au moins une extrémité axiale du rotor linéaire (11) présente une section de palier lisse (32), la section de palier lisse (32) comprenant optionnellement un ou plusieurs corps de glissement (33) montés les uns derrière les autres dans la direction longitudinale du rotor linéaire (11), en particulier sous la forme de bagues de glissement ou de guidage (33), et la machine de formage (1) présentant une structure de palier linéaire réalisée en correspondance avec la section de palier lisse (32), à travers laquelle le rotor linéaire (11) est guidé pendant le fonctionnement, et une section de fixation pour la fixation d'un outil ou d'une matrice de formage étant réalisée en option à une extrémité axiale du rotor linéaire (11), en particulier directement à la suite de la section de palier lisse (32).
